# FASCICULE DE BREVET EUROPEEN

(11) **EP 1 682 778 B1**
(45) Date de publication et mention de la délivrance du brevet: **05.09.2012**
(21) Numéro de dépôt: 04791528.5
(22) Date de dépôt: 14.10.2004
(51) Int. Cl.: F04D 19/04

(54) **POMPE A VIDE TURBO-MOLECULAIRE**
TURBOMOLEKULAR-VAKUUMPUMPE
TURBOMOLECULAR VACUUM PUMP

(30) Priorité: 16.10.2003 FR 0312111
(43) Date de publication de la demande: 26.07.2006
(73) Titulaire: SOCIETE DE MECANIQUE MAGNETIQUE, F-27950 Saint-Marcel (FR)
(72) Inventeur: BRUNET, Maurice, F-27950 SAINTE COLOMBE PRES VERNON (FR)
(74) Mandataire: Thévenet, Jean-Bruno
(86) Numéro de dépôt international: PCT/FR2004/002616
(87) Numéro de publication internationale: WO 2005/038263

(56) Documents cités:
- FR-A- 2 747 431
- US-A- 4 023 920
- US-A- 4 082 376

## Description

La présente invention concerne les pompes à vide turbo-moléculaires.

On connaît des pompes à vide turbo-moléculaires pour des applications générales qui sont relativement bon marché et comprennent des organes tournants montés sur des paliers à billes céramiques. Ces pompes à vide turbo-moléculaires manquent toutefois de robustesse ou de fiabilité pour des applications spécifiques, par exemple pour des applications à la fabrication des semi-conducteurs, à la réalisation de revêtements sur des fibres de verre ou à l'utilisation de microscopes électroniques.

Dans ces derniers cas, on utilise de préférence des pompes turbo-moléculaires dans lesquelles les organes tournants sont montés sur des paliers magnétiques qui autorisent des vitesses de rotation très élevées avec une grande fiabilité et une grande robustesse et sans risque de pollution du fait de l'absence de tout lubrifiant.

On connaît ainsi, par exemple par le brevet US 4023920, des pompes à vide turbo-moléculaires à paliers magnétiques actifs "5 axes", c'est-à-dire comprenant un palier magnétique axial et deux paliers magnétiques radiaux associés à des détecteurs de la position axiale et radiale du rotor de la pompe turbo-moléculaire, et à des circuits électroniques d'asservissement de manière à corriger tout déplacement du rotor en translation selon trois axes d'un repère orthonormé ou en basculement par rapport à deux axes de basculement.

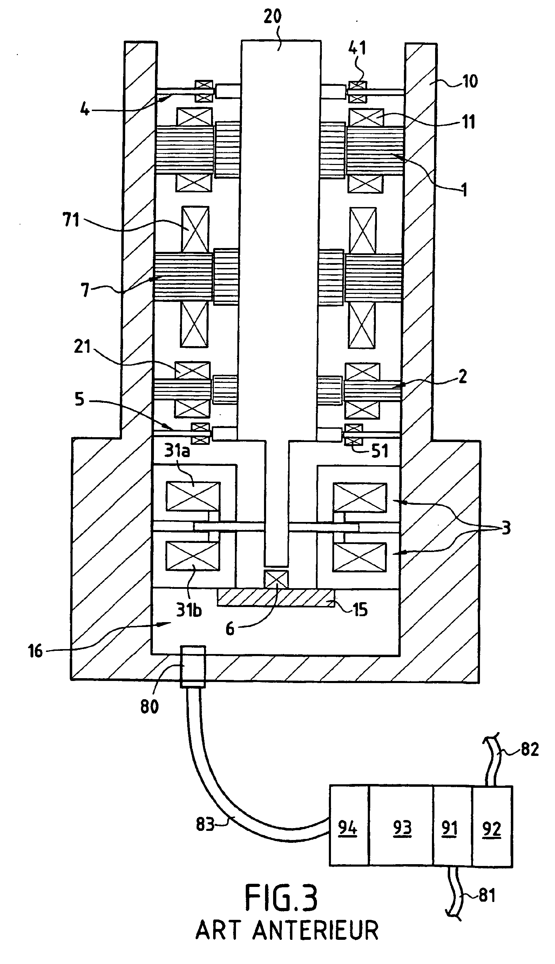

Une pompe à vide turbo-moléculaire à paliers magnétiques actifs selon l'art antérieur présente pour l'essentiel la structure représentée sur la figure 3.

Un rotor vertical 20 est monté à l'intérieur d'une enceinte 10 sur des premier et deuxième paliers magnétiques radiaux 1, 2 situés de part et d'autre d'un moteur électrique 7 comportant des enroulements 71. Chaque palier magnétique radial 1, 2 comprend des enroulements d'électro-aimant 11, 21 faisant partie d'un stator qui est monté de façon fixe à l'intérieur de l'enceinte 10 et coopère avec une armature placée sur le rotor 20. Le palier magnétique radial supérieur 1 peut présenter une taille plus importante que celle du palier magnétique radial inférieur 2, mais il convient de noter que le rotor 20 peut aussi être placé dans une position quelconque autre que verticale.

Des détecteurs radiaux 4, 5 de la position radiale du rotor 20 sont disposés au voisinage des paliers magnétiques radiaux 1, 2. Ces détecteurs radiaux 4, 5 peuvent être par exemple de type inductif avec des enroulements 41, 51 mais pourraient aussi être de type capacitif ou optique par exemple.

Une butée axiale magnétique 3 avec des enroulements statoriques 31a, 31b est disposée à l'extrémité inférieure du rotor et coopère avec une armature rotorique perpendiculaire à l'axe du rotor 20. Un détecteur axial 6 de la position axiale du rotor est placé sur une plaque fixe 15 solidaire de l'enceinte 10, au voisinage de l'extrémité inférieure du rotor 20.

Tous les éléments précédemment décrits (moteur électrique 7, paliers magnétiques radiaux 1 et 2, palier magnétique axial 3, détecteurs radiaux 4 et 5, détecteur axial 6) sont disposés dans la chambre 16 définie à l'intérieur de l'enceinte 10 où règne un vide primaire avec une pression de l'ordre de quelques mbar à un millième de millibar. Un connecteur hermétique 80 comprenant typiquement 54 contacts est nécessaire pour traverser de façon étanche la paroi de l'enceinte 10 et relier les fils d'alimentation et de commande du moteur 7, des paliers 1, 2, 3 et des détecteurs 4, 5, 6 à un câble de liaison 83 qui comporte lui-même typiquement 54 fils et relie les organes électriques internes à la pompe à un bloc de commande 91 à 94 qui est situé à l'extérieur de l'enceinte 10, dans l'atmosphère ambiante normale, de façon délocalisée à une distance plus ou moins grande de la pompe proprement dite.

Le bloc de commande 91 à 94 se compose généralement de circuits 91 d'alimentation générale reliés par un câble 81 à un réseau d'alimentation électrique, de circuits 92 d'interface de communication avec un système extérieur à la pompe à vide reliés par un câble d'interface 82 à ce système extérieur, de circuits 93 de commande du moteur électrique 7 et de circuits 94 de commande des paliers magnétiques axial 3 et radiaux 1, 2.

Le câble de liaison 83 et le connecteur hermétique 80 sont des éléments onéreux du fait de leur grand nombre de fils ou de contacts (typiquement 54 fils) et contribuent à une partie substantielle du prix de la suspension magnétique du rotor de la pompe turbo-moléculaire.

On a également proposé de rapprocher de la pompe certains éléments extérieurs du bloc de commande afin de diminuer le coût du câble de liaison, mais l'utilisation d'un connecteur hermétique à plusieurs dizaines de fils ou points de contact, donc très onéreux, reste nécessaire compte tenu de la multiplicité des éléments internes à la pompe (moteur, enroulements de palier, détecteurs de position) qui doivent être reliés aux circuits extérieurs du bloc de commande 91 à 94.

La présente invention vise à remédier aux inconvénients précités et à permettre de réaliser une pompe à vide turbo-moléculaire à paliers magnétiques actifs qui conserve tous les avantages de robustesse et de fiabilité de ce type de suspension magnétique tout en présentant un coût de fabrication beaucoup plus réduit qui se rapproche de celui des pompes à vide turbo-moléculaires à paliers à billes céramiques.

Ces buts sont atteints, conformément à l'invention, grâce à une pompe à vide turbo-moléculaire à paliers magnétiques actifs, comprenant une enceinte définissant une chambre à vide primaire, un rotor monté à l'intérieur de l'enceinte, un moteur électrique pour l'entraînement en rotation du rotor par rapport à l'enceinte, au moins un palier magnétique axial et au moins un palier magnétique radial pour supporter le rotor par rapport à l'enceinte, au moins un détecteur axial de la position axiale du rotor par rapport à l'enceinte, au moins un détecteur radial de la position radiale du rotor par rapport à l'enceinte, un connecteur électrique étanche monté dans la paroi de l'enceinte et au moins un câble électrique de liaison avec des circuits électriques extérieurs délocalisés, associés au moteur électrique et aux paliers magnétiques axial et radial, caractérisée en ce que les circuits électriques extérieurs délocalisés associés au moteur électrique et aux paliers magnétiques axial et radial comprennent essentiellement des circuits électriques d'alimentation générale du moteur électrique et des paliers magnétiques axial et radial ; en ce que des circuits de commande des paliers magnétiques axial et radial à partir des signaux émis par les détecteurs axial et radial sont surmoulés dans une résine et disposés à l'intérieur de l'enceinte dans la chambre à vide primaire et en ce que le connecteur électrique étanche et le câble électrique de liaison avec les circuits électriques extérieurs délocalisés comprennent chacun un nombre de fils de connexion ou de liaison inférieur à 10.

Les circuits électriques extérieurs délocalisés peuvent comprendre en outre des circuits d'interface de communication avec un système extérieur à la pompe à vide.

Dans la mesure où l'essentiel des connexions des détecteurs, des paliers magnétiques radiaux et du palier magnétique axial ne traversent plus la paroi d'étanchéité de l'enceinte de la pompe, il est possible de réaliser un connecteur hermétique à un faible nombre de contacts dont le coût est réduit, et de la même façon le câble de liaison extérieur ne comprend qu'un petit nombre de fils, ce qui réduit le coût de fabrication. Par ailleurs, l'incorporation de circuits électriques de relativement faible puissance à l'intérieur de la chambre à vide primaire peut être effectuée à faible coût et de façon commode.

Selon un mode de réalisation préférentiel, la pompe à vide turbo-moléculaire comprend des circuits de commande du moteur électrique montés sur une plaque de fond de l'enceinte à l'extérieur de celle-ci, le câble électrique de liaison comprend un premier câble de liaison entre le connecteur électrique étanche et les circuits de commande du moteur électrique et un deuxième câble de liaison entre les circuits de commande du moteur électrique et les circuits électriques extérieurs délocalisés, et le premier câble de liaison comprend un nombre de fils de liaison inférieur à 10 tandis que le deuxième câble de liaison comprend un nombre de fils de liaison inférieur à 5.

Cette disposition permet de réduire encore le nombre de fils dans le deuxième câble de liaison qui peut ainsi sans inconvénient être d'une grande longueur pour assurer une liaison avec des circuits électriques extérieurs délocalisés éloignés.

De préférence, le premier câble de liaison comprend un nombre de fils de liaison inférieur à 8 tandis que le deuxième câble de liaison comprend un nombre de fils de liaison inférieur à 4.

Avantageusement, les circuits de commande des paliers magnétiques axial et radial sont placés dans le fond de l'enceinte.

Dans ce cas, selon un mode particulier de réalisation, un circuit de refroidissement extérieur de la pompe entoure la partie de l'enceinte dans laquelle sont logés les circuits de commande des paliers magnétiques axial et radial.

Selon un mode particulier de réalisation avantageux, les circuits de commande des paliers magnétiques axial et radial comprennent une plaquette dont la face inférieure tournée vers la paroi de l'enceinte porte des composants de puissance d'alimentation des paliers magnétiques axial et radial et dont la face supérieure tournée vers l'intérieur de l'enceinte porte des composants de traitement des signaux délivrés par les détecteurs axial et radial.

Les circuits de commande des paliers magnétiques axial et radial peuvent être disposés dans un boîtier métallique, par exemple en aluminium. Les composants électroniques sont de préférence surmoulés dans une résine sans bulle.

Le montage est particulièrement aisé si les circuits de commande des paliers magnétiques axial et radial sont montés sur une plaque de fond amovible de l'enceinte, à l'intérieur de celle-ci. La plaque de fond de l'enceinte peut être par exemple en aluminium.

D'autres caractéristiques et avantages ressortiront de la description suivante de modes particuliers de réalisation, donnés à titre d'exemples, en référence aux dessins annexés, sur lesquels :
- la figure 1 est une vue en coupe axiale d'un exemple de pompe à vide turbo-moléculaire selon l'invention équipée de paliers magnétiques actifs,
- la figure 2 est une vue de détail montrant l'incorporation de circuits de commande de paliers magnétiques actifs à l'intérieur de l'enceinte de la pompe à vide, selon un mode de réalisation particulier de l'invention, et
- la figure 3 est une vue en coupe axiale d'un exemple de pompe à vide turbo-moléculaire de l'art antérieur.

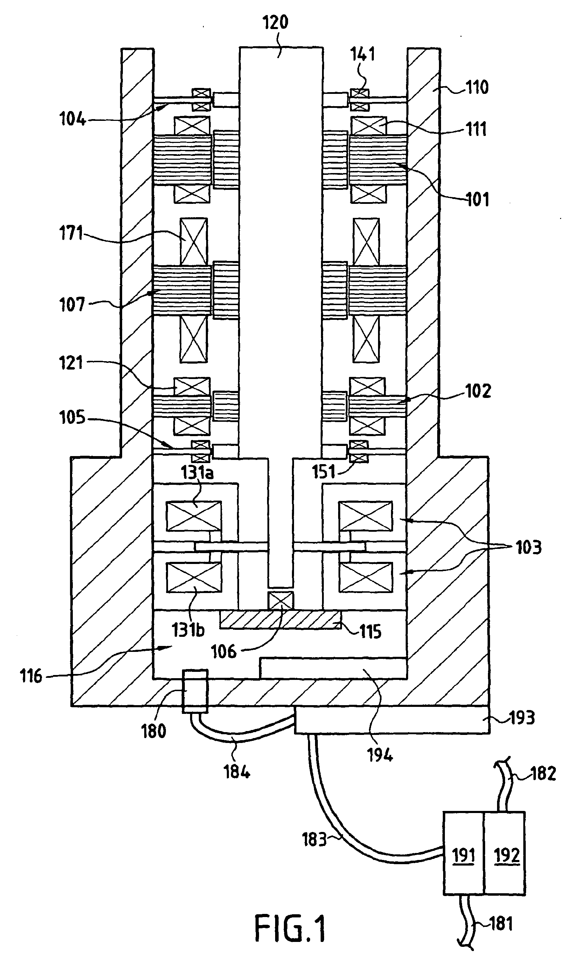

La figure 1 montre de façon schématique un mode particulier de réalisation d'une pompe à vide turbo-moléculaire selon l'invention. Les éléments de cette pompe à vide qui sont analogues ou identiques à des éléments de la pompe à vide turbo-moléculaire connue de la figure 3 portent les mêmes références mais en étant précédées du chiffre 1 définissant une centaine. Ainsi, les paliers magnétiques radiaux 101, 102 de la figure 1 correspondent aux paliers magnétiques radiaux 1, 2 de la figure 3. De la même façon la butée magnétique axiale 103, les détecteurs radiaux 104, 105, le détecteur axial 106 et le moteur électrique 107 correspondent respectivement à la butée magnétique axiale 3, aux détecteurs radiaux 4, 5, au détecteur axial 6 et au moteur électrique 7, de sorte que ces éléments ne seront pas décrits à nouveau.

La configuration générale de la pompe à vide de la figure 1, avec l'enceinte étanche 110 définissant une chambre 116 de vide primaire dans laquelle est logé le rotor 120 entraîné par le moteur électrique 107 et supporté par la suspension magnétique active reste semblable à celle de la pompe à vide connue de la figure 3. Dans chacun des cas on n'a pas représenté l'ensemble des éléments de la pompe à vide qui sont entraînés par le rotor 120 et restent classiques. La structure du rotor 120 sous la forme d'un mandrin vertical n'est elle-même donnée qu'à titre d'exemple et d'autres formes de rotor, par exemple en forme de cloche, comme dans le cas du brevet US 4023920, peuvent être choisies.

Comme indiqué plus haut, la structure du moteur électrique 107 et de ses enroulements 171, celle des paliers magnétiques radiaux 101, 102 et de leurs enroulements 111, 121, du palier axial 103 et de ses enroulements 131a, 131b de même que celle des détecteurs radiaux 104, 105 et de leurs enroulements 141, 151 et celle du détecteur axial 106 porté par le support 115 peuvent rester classiques.

L'invention permet d'optimiser les liaisons entre les bobinages de ces éléments d'entraînement (moteur 107), de support (paliers 101, 102, 103) ou de détection (détecteurs 104, 105, 106) et les circuits du bloc de commande 191, 192, 193, 194 dont les fonctions restent inchangées, mais dont l'agencement particulier permet de faciliter et rendre moins coûteuse la fabrication de l'ensemble de la pompe.

Selon l'invention, on conserve à distance de la pompe à vide turbo-moléculaire proprement dite les circuits électriques 191 d'alimentation générale du moteur électrique 107 et des paliers magnétiques axial 103 et radiaux 101, 102. Les circuits d'alimentation 191 qui développent une forte puissance et sont connectés à une alimentation secteur traditionnelle évitent ainsi de perturber l'environnement de la pompe à vide et ne nécessitent qu'un câble de liaison 183 bon marché ne comprenant que 2 ou 3 fils.

Les circuits 192 d'interface de communication avec un système extérieur à la pompe à vide, par un câble d'interface 182, peuvent eux-mêmes rester délocalisés car leur liaison avec la pompe à vide n'exige que la présence d'un seul fil ou au maximum de deux fils.

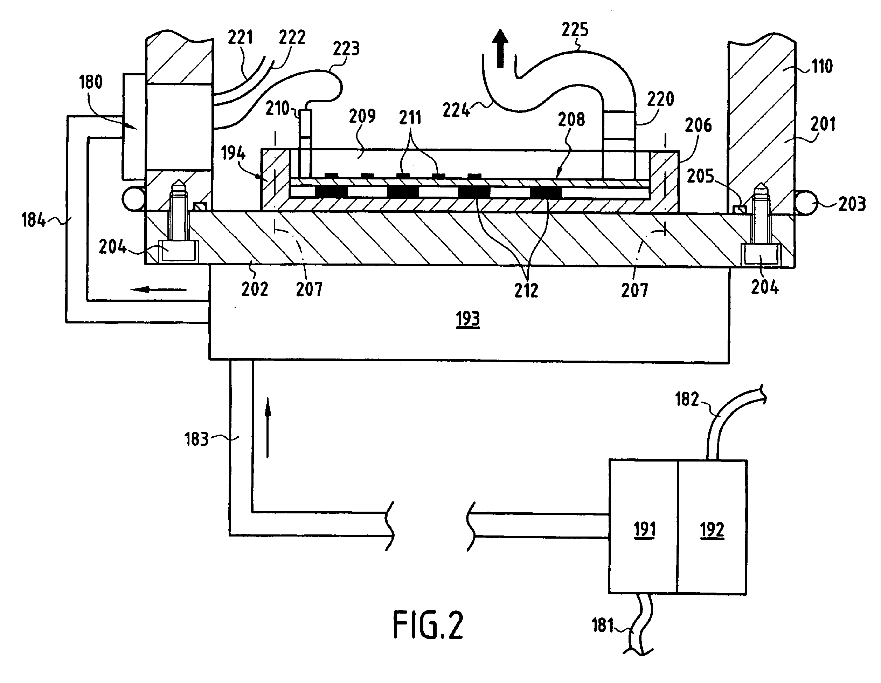

En revanche, les circuits 193 de commande du moteur électrique sont avantageusement montés sur une plaque de fond de l'enceinte 110, à l'extérieur de celle-ci (figures 1 et 2). De la sorte, le câble de liaison 183 entre les circuits de commande du moteur 193 et les circuits extérieurs délocalisés 191, 192 peut ne comprendre que 2 ou 3 fils tandis que le câble de liaison 184 entre les circuits 193 de commande du moteur électrique et le connecteur hermétique 180 peut ne comprendre que 5 à 7 fils et reste de très courte longueur. La chaleur dégagée par les circuits 193 de commande du moteur électrique peut par ailleurs facilement rayonner vers l'extérieur, dès lors que la puissance dissipée est de l'ordre de quelques dizaines voire quelques centaines de watts.

Selon l'invention, les circuits 194 de commande des paliers magnétiques axial 103 et radiaux 101, 102 à partir des signaux émis par les détecteurs axial 106 et radiaux 104, 105 sont disposés dans un boîtier 206 (figure 2) placé à l'intérieur de l'enceinte 110 dans la chambre à vide primaire 116. De ce fait, toutes les connexions entre les détecteurs 104, 105, 106 et les paliers magnétiques actifs 101, 102, 103 sont effectuées à l'intérieur de l'enceinte 110 et seuls un ou deux fils électriques sont nécessaires pour l'alimentation électrique de ces éléments. Le connecteur étanche 180 peut donc facilement comprendre un nombre de points de connexion inférieur à 10, par exemple entre 5 et 7 points de connexion, ce qui simplifie grandement sa réalisation.

Comme on peut le voir sur la figure 2, les circuits 194 de commande des paliers magnétiques sont disposés dans un boîtier métallique 206, qui peut être avantageusement en aluminium, et qui est fixé par des moyens de liaison 207, représentés symboliquement sur la figure 2, sur une plaque de fond 202 de l'enceinte 110, cette plaque de fond 202, qui peut également être en aluminium, étant de préférence montée de façon amovible à l'aide de moyens de liaison 204 sur la paroi verticale 201 de l'enceinte 110. Un joint 205 assure l'étanchéité entre la plaque de fond 202 et la paroi verticale 201 de l'enceinte 110.

La plaque de fond amovible 202 peut ainsi porter à sa partie inférieure extérieure les circuits 193 de commande du moteur et à sa partie supérieure intérieure les circuits 194 de commande des paliers magnétiques.

Un circuit de refroidissement extérieur 203 de la pompe entoure de préférence la partie de l'enceinte 110 dans laquelle sont logés les circuits 194 de commande des paliers magnétiques. Ce circuit de refroidissement peut être classique et comprendre un tube de circulation d'un liquide de refroidissement.

Le connecteur hermétique 180 peut être lui-même placé sur la plaque de fond 202 ou, comme représenté sur la figure 2, à la partie inférieure de la paroi verticale 201 de l'enceinte 110. On voit sur la figure 2, que le connecteur hermétique 180 comprend un minimum de fils pénétrant à l'intérieur de l'enceinte 110, à savoir essentiellement deux fils 221, 222 destinés à l'alimentation du moteur 107 et un ou deux fils 223 destinés à l'alimentation des circuits 194 de commande des paliers, ainsi que le cas échéant un fil de liaison avec l'interface de communication avec un système extérieur à la pompe à vide.

Les circuits 194 de commande des paliers sont par ailleurs reliés à travers un connecteur 220 à un nombre de fils 224, 225 plus important de liaison aux enroulements 111, 121, 131a, 131b des paliers magnétiques et aux détecteurs 104, 105, 106. Ces liaisons étant toutes situées à l'intérieur de l'enceinte 110, le connecteur 220 n'a pas besoin d'être étanche et peut être réalisé de façon simple, de même que le connecteur 210 de liaison au fil 223 d'alimentation.

Les circuits 194 de commande des paliers magnétiques peuvent comprendre une plaquette 208 dont la face inférieure tournée vers la paroi de l'enceinte 110 porte des composants électroniques de puissance 212 d'alimentation des paliers magnétiques axial 103 et radiaux 101, 102 et dont la face supérieure tournée vers l'intérieur de l'enceinte 110 porte des composants 211 de traitement des signaux délivrés par les détecteurs axial 106 et radiaux 104, 105. Cette disposition permet de faciliter l'évacuation de la chaleur produite par les circuits 194 de commande des paliers magnétiques.

Les circuits 194 de commande des paliers magnétiques présentent une relativement faible puissance, de l'ordre de 100 watts ou même moins, de sorte que leur incorporation dans la partie vide primaire de la pompe peut être effectuée sans modification de la géométrie de base de l'enceinte. Le fait que la ou les cartes électroniques 208 des circuits 194 de commande des paliers magnétiques soient montées directement sur la plaque de fond 202 en métal qui constitue alors leur boîtier, ou par l'intermédiaire d'un boîtier métallique 206 lui-même en contact avec la plaque de fond 202 de la pompe à vide, permet d'assurer le refroidissement limité nécessaire, ce refroidissement pouvant être accentué par la présence au voisinage de la base de l'enceinte 110 d'un système général 203 de refroidissement de la pompe.

Les circuits 194 de commande des paliers magnétiques sont surmoulés dans une résine sans bulle, préalablement dégazée, qui assure les fonctions d'étanchéité et d'homogénéisation de la température, voire de conduction thermique et permet de pallier les inconvénients du vide et de ses éventuelles variations brutales.

Grâce à une intégration sélective des circuits 194 de commande des paliers magnétiques dans le vide primaire de la pompe à vide turbo-moléculaire, le nombre de contacts du connecteur hermétique 180 peut ainsi être ramené d'une valeur typique de 54 contacts à 5 à 7 contacts (ceux nécessaires pour l'alimentation et la commande du moteur, l'alimentation des paliers magnétiques et la liaison avec le bloc d'interface 192). La maintenance reste aisée par un simple démontage de la plaque de fond 202. Les composants des circuits 194 de commande des paliers magnétiques disposés dans le vide restent protégés face à des variations brutales de la pression du vide grâce à leur surmoulage dans la plaque de fond de fermeture de la pompe, ce surmoulage contribuant à améliorer le niveau de température et son homogénéité.

Naturellement, différentes variantes de réalisation sont envisageables et par exemple les circuits 193 de commande du moteur pourraient rester délocalisés au voisinage des circuits d'alimentation 191 et des circuits d'interface 192. Dans ce cas, il existe un seul câble de liaison 184 entre le connecteur hermétique 180 à faible nombre de contacts (moins de huit) et l'ensemble des circuits délocalisés 191, 192, 193, le câble de liaison 184 pouvant toujours ne pas comporter plus de sept fils, de sorte qu'il s'agit là encore d'un mode de réalisation économique.

## Revendications

1. Pompe à vide turbo-moléculaire à paliers magnétiques actifs, comprenant une enceinte (110) définissant une chambre (116) à vide primaire, un rotor (120) monté à l'intérieur de l'enceinte (110), un moteur électrique (107) pour l'entraînement en rotation du rotor (120) par rapport à l'enceinte (110), au moins un palier magnétique axial (103) et au moins un palier magnétique radial (101, 102) pour supporter le rotor (120) par rapport à l'enceinte (110), au moins un détecteur axial (106) de la position axiale du rotor (120) par rapport à l'enceinte (110), au moins un détecteur radial (104, 105) de la position radiale du rotor (120) par rapport à l'enceinte (110), un connecteur électrique étanche (180) monté dans la paroi de l'enceinte (110) et au moins un câble électrique (183, 184) de liaison avec des circuits électriques extérieurs délocalisés, associés au moteur électrique (107) et aux paliers magnétiques axial (103) et radial (101, 102),
**caractérisée en ce que** les circuits électriques extérieurs délocalisés associés au moteur électrique (107) et aux paliers magnétiques axial (103) et radial (101, 102) comprennent essentiellement des circuits électriques (191) d'alimentation générale du moteur électrique (107) et des paliers magnétiques axial (103) et radial (101, 102) ; **en ce que** des circuits (194) de commande des paliers magnétiques axial (103) et radial (101, 102) à partir des signaux émis par les détecteurs axial (106) et radial (104, 105) sont surmoulés dans une résine et disposés à l'intérieur de l'enceinte (110) dans la chambre (116) à vide primaire et **en ce que** le connecteur électrique étanche (180) et le câble électrique (183, 184) de liaison avec les circuits électriques extérieurs délocalisés (191, 192) comprennent chacun un nombre de fils de connexion ou de liaison inférieur à 10.

2. Pompe à vide turbo-moléculaire selon la revendication 1, **caractérisée en ce que** les circuits électriques extérieurs délocalisés comprennent en outre des circuits (192) d'interface de communication avec un système extérieur à la pompe à vide.

3. Pompe à vide turbo-moléculaire selon la revendication 1 ou la revendication 2, **caractérisée en ce qu'**elle comprend des circuits (193) de commande du moteur électrique montés sur une plaque de fond (202) de l'enceinte (110) à l'extérieur de celle-ci, **en ce que** le câble électrique de liaison (183, 184) comprend un premier câble (184) de liaison entre le connecteur électrique étanche (180) et les circuits (193) de commande du moteur électrique et un deuxième câble (183) de liaison entre les circuits (193) de commande du moteur électrique et les circuits électriques extérieurs délocalisés (191, 192), et **en ce que** le premier câble (184) de liaison comprend un nombre de fils de liaison inférieur à 10 tandis que le deuxième câble (183) de liaison comprend un nombre de fils de liaison inférieur à 5.

4. Pompe à vide turbo-moléculaire selon la revendication 3, **caractérisée en ce que** le premier câble (184) de liaison comprend un nombre de fils de liaison inférieur à 8 tandis que le deuxième câble (183) de liaison comprend un nombre de fils de liaison inférieur à 4.

5. Pompe à vide turbo-moléculaire selon l'une quelconque des revendications 1 à 4, **caractérisée en ce que** les circuits (194) de commande des paliers magnétiques axial (103) et radial (101, 102) sont placés dans le fond de l'enceinte (110).

6. Pompe à vide turbo-moléculaire selon l'une quelconque des revendications 1 à 5, **caractérisée en ce qu'**un circuit de refroidissement extérieur (203) de la pompe entoure la partie de l'enceinte (110) dans laquelle sont logés les circuits (194) de commande des paliers magnétiques axial (103) et radial (101, 102).

7. Pompe à vide turbo-moléculaire selon l'une quelconque des revendications 1 à 6, **caractérisée en ce que** les circuits (194) de commande des paliers magnétiques axial (103) et radial (101, 102) comprennent une plaquette (208) dont la face inférieure tournée vers la paroi de l'enceinte (110) porte des composants de puissance d'alimentation des paliers magnétiques axial (103) et radial (101, 102) et dont la face supérieure tournée vers l'intérieur de l'enceinte (110) porte des composants de traitement des signaux délivrés par les détecteurs axial (106) et radial (104, 105).

8. Pompe à vide turbo-moléculaire selon l'une quelconque des revendications 1 à 7, **caractérisée en ce que** les circuits (194) de commande des paliers magnétiques axial (103) et radial (101, 102) sont disposés dans un boîtier en aluminium.

9. Pompe à vide turbo-moléculaire selon l'une quelconque des revendications 1 à 8, **caractérisée en ce que** les circuits (194) de commande des paliers magnétiques axial (103) et radial (101, 102) sont montés sur une plaque de fond (202) amovible de l'enceinte (110) à l'intérieur de celle-ci.

10. Pompe à vide turbo-moléculaire selon la revendication 3 ou la revendication 9, **caractérisée en ce que** la plaque de fond (202) de l'enceinte (110) est réalisée en aluminium.

11. Pompe à vide turbo-moléculaire selon l'une quelconque des revendications 1 à 10, **caractérisée en ce qu'**elle comprend deux paliers magnétiques radiaux (101, 102) disposés de part et d'autre du moteur électrique (107).

## Claims

1. A turbomolecular vacuum pump having active magnetic bearings, the pump comprising an enclosure (110) defining a primary vacuum chamber (116), a rotor (120) mounted inside the enclosure (110), an electric motor (107) for rotating the rotor (120) relative to the enclosure (110), at least one axial magnetic bearing (103), and at least one radial magnetic bearing (101, 102) for supporting the rotor (120) relative to the enclosure (110), at least one axial detector (106) for detecting the axial position of the rotor (120) relative to the enclosure (110), at least one radial detector (104, 105) for detecting the radial position of the rotor (120) relative to the enclosure (110), a hermetic leaktight electrical connector (180) mounted in the wall of the enclosure (110), and at least one electric cable (183, 184) providing a connection with remote external electric circuits associated with the electric motor (107), and with the axial and radial magnetic bearings (103 and 101, 102),
the pump being **characterized in that** the remote external electric circuits associated with the electric motor (107) and with the axial and radial magnetic bearings (103 and 101, 102) essentially comprise general power supply circuits (191) for electrically powering the electric motor (107) and the axial and radial magnetic bearings (103 and 101, 102), **in that** circuits (194) for controlling the axial and radial magnetic bearings (103 and 101, 102) on the basis of signals issued by the axial and radial detectors (106 and 104, 105) are embedded in a resin and placed inside the enclosure (110) in the primary vacuum chamber (116), and **in that** the leaktight electrical connector (180) and the electric cable (183, 184) providing a connection with the remote external electric circuits (191, 192) each comprises a number of connection wires that is less than ten.

2. A turbomolecular vacuum pump according to claim 1, **characterized in that** the remote external electric circuits further comprise circuits (192) providing a communications interface with a system external to the vacuum pump.

3. A turbomolecular vacuum pump according to claim 1 or claim 2, **characterized in that** it includes circuits (193) for controlling the electric motor that are mounted on a bottom plate (202) of the enclosure (110) on the outside thereof, **in that** the connection electric cable (183, 184) comprises a first connection cable (184) between the leaktight electrical connector (180) and the circuits (193) for controlling the electric motor, and a second connection cable (183) between the circuits (193) for controlling the electric motor and the remote external electric circuits (191, 192), and **in that** the first connection cable (184) has a number of connection wires that is less than ten, while the second connection cable (183) has a number of connection wires that is less than five.

4. A turbomolecular vacuum pump according to claim 3, **characterized in that** the first connection cable (184) has a number of connection wires that is less than eight, while the second connection cable (183) has a number of connection wires that is less than four.

5. A turbomolecular vacuum pump according to any one of claims 1 to 4, **characterized in that** the circuits (194) for controlling the axial and radial magnetic bearings (103 and 101, 102) are placed in the bottom of the enclosure (110).

6. A turbomolecular vacuum pump according to any one of claims 1 to 5, **characterized in that** a cooling circuit (203) external to the pump surrounds a portion of the enclosure (110) housing the circuits (194) for controlling the axial and radial magnetic bearings (103 and 101, 102).

7. A turbomolecular vacuum pump according to any one of claims 1 to 6, **characterized in that** the circuits (194) for controlling the axial and radial magnetic bearings (103 and 101, 102) include a plate (208) having a bottom face facing towards the wall of the enclosure (110) and carrying power components for powering the axial and radial magnetic bearings (103 and 101, 102), and a top face facing towards the inside of the enclosure (110) and carrying components for processing signals issued by the axial and radial detectors (106 and 104, 105).

8. A turbomolecular vacuum pump according to any one of claims 1 to 7, **characterized in that** the circuits (194) for controlling the axial and radial magnetic bearings (103 and 101, 102) are placed in an aluminum housing.

9. A turbomolecular vacuum pump according to any one of claims 1 to 8, **characterized in that** the circuits (194) for controlling the axial and radial magnetic bearings (103 and 101, 102) are mounted on a removable bottom plate (202) of the enclosure (110), inside the enclosure.

10. A turbomolecular vacuum pump according to claim 3 or claim 9, **characterized in that** the bottom plate of the enclosure (110) is made of aluminum.

11. A turbomolecular vacuum pump according to any one of claims 1 to 10, **characterized in that** it has two radial magnetic bearings (101, 102) disposed on either side of the electric motor (107).

## Patentansprüche

1. Turbomolekular-Vakuumpumpe mit aktiven Magnetlagern, die eine Einhausung (110), die eine Primärvakuumkammer definiert, einen Rotor (120), der im Inneren der Einhausung (110) montiert ist, einen Elektromotor (107) für das Antreiben des Rotors (120) in Drehung in Bezug zu der Einhausung (110), mindestens ein axiales Magnetlager (103) und mindestens ein radiales Magnetlager (101, 202), um den Rotor (120) in Bezug zu der Einhausung (110) zu stützen, mindestens einen axialen Detektor (106) der axialen Position des Rotors (120) in Bezug zu der Einhausung (110), mindestens einen radialen Detektor (104, 105) der radialen Position des Rotors (120) in Bezug zu der Einhausung (110), einen dichten Stromstecker (180), der in die Wand der Einhausung (110) montiert ist, und mindestens ein elektrisches Kabel (183, 184) zum Verbinden mit dezentralen externen Stromkreisen, die mit dem Elektromotor (107) und dem axialen (103) und radialen (101, 102) Magnetlager verbunden sind, aufweist, **dadurch gekennzeichnet, daß** die dezentralen äußeren Stromkreise, die mit dem Elektromotor (107) und dem axialen (103) und dem radialen Magnetlager (101, 102) verbunden sind, im wesentlichen allgemeine elektrische Versorgungskreise (191) des Elektromotors (107) und des axialen (103) und des radialen Magnetlagers (101, 102) aufweisen, daß die Steuerschaltungen (194) des axialen (103) und des radialen Magnetlagers (101, 102 ausgehend von Signalen, die von dem axialen (106) und dem radialen Detektoren (104, 105) in einem Harz abgeformt und im Inneren der Einhausung 110) in der Primärvakuumkammer (116) angeordnet sind, und daß der dichte elektrische Stecker (180) und das elektrische Kabel (183, 184) zur Verbindung mit den dezentralen äußeren Stromkreisen (191, 192) jeweils eine Anzahl Anschlußleiter oder Verbindungsleiter kleiner als 10 aufweisen.

2. Turbomolekular-Vakuumpumpe nach Anspruch 1, **dadurch gekennzeichnet, daß** die dezentralen externen Stromkreise ferner Schnittstellenschaltungen (192) zur Kommunikation mit einem System außerhalb der Vakuumpumpe aufweisen.

3. Turbomolekular-Vakuumpumpe nach Anspruch 1 oder Anspruch 2, **dadurch gekennzeichnet, daß** sie Schaltungen (193) zum Steuern des Elektromotors aufweist, die auf eine Grundplatte (202) der Einhausung (110) außerhalb dieser montiert sind, und daß das elektrische Verbindungskabel (183, 184) ein erstes Kabel (184) zum Verbinden zwischen dem dichten Stromstecker (180) und den Steuerschaltungen (193) des Elektromotors und ein zweites Kabel (183) zum Verbinden zwischen den Steuerschaltungen (193) des Elektromotors und den dezentralen externen Stromkreisen (191, 192) aufweist, und daß das erste Verbindungskabel (184) eine Anzahl Verbindungsleiter kleiner als 10 aufweist, während das zweite Verbindungskabel (183) eine Anzahl Verbindungsleiter kleiner als 5 aufweist.

4. Turbomolekular-Vakuumpumpe nach Anspruch 3, **dadurch gekennzeichnet, daß** das erste Verbindungskabel (184) eine Anzahl Verbindungsleiter kleiner als 8 aufweist, während das zweite Verbindungskabel (183) eine Anzahl Verbindungsleiter kleiner als 4 aufweist.

5. Turbomolekular-Vakuumpumpe nach einem der Ansprüche 1 bis 4, **dadurch gekennzeichnet, daß** die Steuerschaltungen (194) des axialen (103) und des radialen Magnetlagers (101, 102) in dem Grund der Einhausung (110) plaziert sind.

6. Turbomolekular-Vakuumpumpe nach einem der Ansprüche 1 bis 5, **dadurch gekennzeichnet, daß** ein externer Kühlkreislauf (203) der Pumpe den Teil der Einhausung (110) umgibt, in dem die Steuerschaltungen (194) des axialen (103) und des radialen Magnetlagers (101, 102) untergebracht sind.

7. Turbomolekular-Vakuumpumpe nach einem der Ansprüche 1 bis 6, **dadurch gekennzeichnet, daß** die Steuerschaltungen (194) des axialen (103) und des radialen Magnetlagers (10 1,102) eine Platte (208) aufweisen, deren zu der Wand der Einhausung (110) gerichtete Unterseite Leistungsbauteile zur Versorgung des axialen (103) und des radialen Magnetlagers (101, 102) aufweist, und deren Oberseite, die zu dem Inneren der Einhausung (110) gerichtet ist, Bauteile zur Verarbeitung der Signale, die von dem axialen (106) und dem radialen Detektor (104, 105) geliefert werden, trägt.

8. Turbomolekular-Vakuumpumpe nach einem der Ansprüche 1 bis 7, **dadurch gekennzeichnet, daß** die Steuerschaltungen (194) des axialen (103) und des radialen Magnetlagers (101, 102), in einem Gehäuse aus Aluminium angeordnet sind.

9. Turbomolekular-Vakuumpumpe nach einem der Ansprüche 1 bis 8, **dadurch gekennzeichnet, daß** die Steuerschaltungen (194) des axialen (103) und des radialen Magnetlagers (101, 102) auf eine Grundplatte (202), die aus der Einhausung (110) genommen werden kann, in deren Innerem montiert sind.

10. Turbomolekular-Vakuumpumpe nach einem der Ansprüche 3 oder 9, **dadurch gekennzeichnet, daß** die Grundplatte (202) der Einhausung (110) aus Aluminium hergestellt ist.

11. Turbomolekular-Vakuumpumpe nach einem der Ansprüche 1 bis 10, **dadurch gekennzeichnet, daß** sie zwei radiale Magnetlager (101, 102) aufweist, die auf jeder Seite des Elektromotors (107) angeordnet sind.
